# EUROPEAN PATENT SPECIFICATION

(11) **EP 3 641 141 B1**
(45) Date of publication and mention of the grant of the patent: **25.11.2026**
(21) Application number: 18816708.4
(22) Date of filing: 15.03.2018
(51) Int. Cl.: H04M 9/08, H04B 3/23, H04R 3/02, H04S 7/00

(54) **VOICE SIGNAL PROCESSING DEVICE, VOICE SIGNAL PROCESSING METHOD AND VOICE SIGNAL PROCESSING PROGRAM**
SPRACHSIGNALVERARBEITUNGSVORRICHTUNG, SPRACHSIGNALVERARBEITUNGSVERFAHREN UND SPRACHSIGNALVERARBEITUNGSPROGRAMM
DISPOSITIF DE TRAITEMENT DE SIGNAL VOCAL, PROCÉDÉ DE TRAITEMENT DE SIGNAL VOCAL ET PROGRAMME DE TRAITEMENT DE SIGNAL VOCAL

(30) Priority: 12.06.2017 JP 2017114908
(43) Date of publication of application: 22.04.2020
(73) Proprietor: Audio-Technica Corporation, Machida-shi, Tokyo 194-8666 (JP)
(72) Inventor: ONIZUKA Kazuhiro, Machida-shi Tokyo 194-8666 (JP); AIKAWA Toru, Machida-shi Tokyo 194-8666 (JP); KIKUHARA Yasuhito, Machida-shi Tokyo 194-8666 (JP); JITSUKATA Yuri, Machida-shi Tokyo 194-8666 (JP)
(74) Representative: MacDougall, Alan John Shaw
(86) International application number: PCT/JP2018/010330
(87) International publication number: WO 2018/230062

(56) References cited:
- WO-A1-2005/076663
- JP-A- 2001 251 224
- JP-A- 2005 323 308
- JP-A- 2005 347 957
- JP-A- S6 412 648

## Description

### TECHNICAL FIELD

The present invention relates to a sound signal processing device, a sound signal processing method, and a sound signal processing program.

### BACKGROUND ART

In recent years, communication conference systems, for example, telephone conference systems and television conference systems using communication lines such as the Internet, have been used for conferences between physically distant bases. In such communication conference systems, an acoustic echo is generated by collecting sound output from a loudspeaker at one base based on a sound signal (hereinafter referred to as "reception signal") received from another base by a microphone at one base.

An acoustic echo is generally suppressed or removed with an echo canceller included in a communication conference system. An ordinary echo canceller includes an adaptive filter that generates a removal signal to remove an echo signal based on the reception signal and the echo signal corresponding to the acoustic echo. The echo canceller removes the echo signal by performing addition or subtraction on the removal signal and the echo signal.

A multi-channel support echo canceller has been proposed as the above-mentioned echo canceller. The multi-channel support echo canceller suppresses and/or removes echo signals from a plurality of microphones (for example, see Japanese Unexamined Patent Application Publication No. 2002-252577).

JP S64 12648 discloses a reception input terminal, a speaker, a set of microphones, a transmission output terminal, a training signal source, an A/D converter, a deduction circuit, a pseudo echo path, an A/D converter, a subtractor, a D/A converter, a set of gain adjusting circuits, adders and a set of gain adjusting circuits.

JP 2005323308 discloses that a "learning mode" is set when a voice collecting device is turned on. A calibrated sound is outputted from an echo cancellation calibrated sound generator via a speaker. At this time, an echo is detected by a microphone, and a parameter is obtained for echo cancellation which cancels the echo in an echo canceler.

JP 2005347957 discloses a method including steps of: adding an additional signal to a received signal for varying inter-channel correlation to make a speaker reproduced signal; generating an n-channel pseudo echo from the speaker reproduced signal; obtaining an n-channel error signal from a sound pickup signal and the n-channel pseudo echo; obtaining a correction vector from the n-channel error signal and an M-channel reproduction signal; and sequentially correcting a pseudo echo path by means of the correction vector.

WO 2005/076663 discloses a system comprising echo cancelling means coupled between an audio output and a distorted desired audio sensing microphone array, and a filter arrangement coupled to the echo cancelling means and/or the microphone array.

JP 2001251224 discloses that a reproduction unit reproduces an acoustic signal from a received signal x(k) and a subtractor subtracts a pseudo-echo signal u(k) received from a pseudo echo path from a signal y(k) picked up by a microphone to obtain a residual signal e(k). A reception signal vector generating section, receiving the reception signal, generates a reception signal vector X(k) and a correction direction calculation section multiplies a positive symmetric matrix B by the reception signal vector X(k) to calculate a correction direction BX(k).

### SUMMARY OF INVENTION

### TECHNICAL PROBLEM

The echo canceller disclosed in Japanese Unexamined Patent Application Publication No. 2002-252577 includes a plurality of echo cancel parts corresponding to respective microphones. By removing the echo signals included in input signals from the microphones corresponding to the respective echo cancel parts, the echo canceller supports multi-channels. The echo canceller disclosed in Japanese Unexamined Patent Application Publication No. 2002-252577 requires echo cancellers of the same number as that of the microphones. Therefore, the circuit configuration and signal processing are complicated.

The present invention provides a sound signal processing device, a sound signal processing method, and a sound signal processing program, as set out in the appended claims.

### SOLUTION TO PROBLEM

The sound signal processing device according to the present invention includes: an output part configured to output a reception signal; an input part configured to combine signals input from each of a plurality of microphones and to generate a transmission signal, wherein the microphones are configured to collect an echo component of the reception signal and voice of a speaker and to generate an echo signal corresponding to the echo component and a sound signal corresponding to the voice of the speaker; a removal signal generator configured to generate a removal signal for removing the echo signal included in the transmission signal, based on a filter coefficient F; a controller configured to calculate the filter coefficient F; a removal part configured to generate an echo removal signal based on the transmission signal and the removal signal and a switch part configured to switch the signal input to the removal part in individual transmission signals corresponding to the respective microphones, wherein the controller is configured to calculate individual filter coefficients corresponding to the respective microphones, and to calculate the filter coefficient F by combining the individual filter coefficients, and the input part is configured to generate the individual transmission signals corresponding to the respective microphones based on the signals input from the respective microphones, and to generate the transmission signal by combining the individual transmission signals, and the switch part is configured to input the individual transmission signals corresponding to the respective microphones to the removal part while switching the individual transmission signals, when the sound signal is not included in the transmission signal.

### ADVANTAGEOUS EFFECTS OF INVENTION

According to the present invention, echo signals included in input signals from each of a plurality of microphones can be removed with a simple circuit configuration.

### BRIEF DESCRIPTION OF DRAWINGS

FIG. 1 is a functional block diagram illustrating an embodiment of a sound signal processing device according to the present invention.
FIG. 2 is a flowchart illustrating an embodiment of a sound signal processing method according to the present invention.
FIG. 3 is a flowchart of initialization processing included in the sound signal processing method of FIG. 2.
FIG. 4 is a flowchart of initial learning processing included in the sound signal processing method of FIG. 2.
FIG. 5 is a functional block diagram illustrating flow of signals in the initial learning processing of FIG. 4.
FIG. 6 is a flowchart of echo signal removal processing included in the sound signal processing method of FIG. 2.
FIG. 7 is a functional block diagram illustrating flow of signals in the echo signal removal processing of FIG. 6.
FIG. 8 is a flowchart of specification processing included in the signal processing of FIG. 6.
FIG. 9 is a functional block diagram illustrating flow of signals in the specification processing of FIG. 8.
FIG. 10 is a flowchart of update processing included in the signal processing of FIG. 8.
FIG. 11 is a functional block diagram illustrating flow of signals in the update processing of FIG. 10.
FIG. 12 is a functional block diagram illustrating another embodiment of the present invention.

### DESCRIPTION OF EMBODIMENTS

Embodiments of a sound signal processing device, a sound signal processing method, and a sound signal processing program according to the present invention will now be described with reference to the attached drawings.

### Sound Signal Processing Device

Embodiments of a sound signal processing device according to the present invention (hereinafter referred to as "the present device") will now be described.

### Configuration of Sound Signal Processing Device

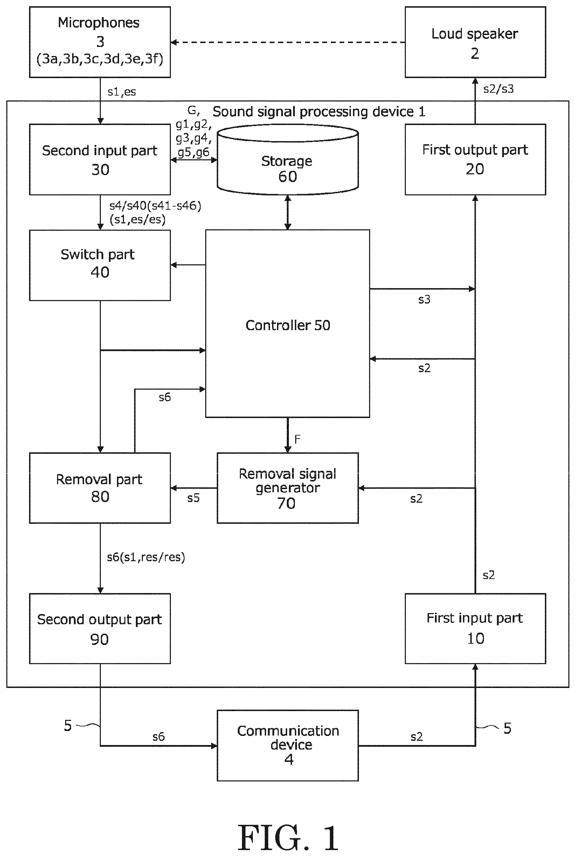

FIG. 1 is a functional block diagram illustrating an embodiment of the present device.

The present device 1 performs processing, such as mixing, distribution, balance adjustment, for signals (input signals) from devices, such as microphones 3 that converts voice and music into electrical signals. The present device 1 is, for example, a mixer.

In the following explanation, for example, the present device 1 is used in a television conference performed between a speaker in a first base and a speaker in a second base physically distant from the first base. The present device 1 is installed in the first base. In addition, the present device 1 is connected with a loudspeaker 2 disposed in the first base, and with six microphones 3a, 3b, 3c, 3d, 3e, and 3f (six channels). The first base and the second base are, for example, rooms, such as conference rooms.

Part of voice (sound) from the second base which is output to the indoor space of the first base from the loudspeaker 2 is collected with the microphones 3 through the indoor space. At this stage, the microphones 3 generate and output a signal (hereinafter referred to as "echo signal") es corresponding to the part (hereinafter referred to as "echo component") of voice (sound) output from the loudspeaker 2. The microphones 3 generate and output a signal (hereinafter referred to as "sound signal") s1 corresponding to the voice of the speaker, when the speaker at the first base speaks. Specifically, when the speaker at the first base and the speaker at the second base are speaking, the signals output from the microphones 3 includes the sound signal s1 and the echo signal es. In contrast, when only the speaker at the second base is speaking, the signals output from the microphones 3 includes the echo signal es.

The present device 1 includes a first input part 10, a first output part 20, a second input part 30, a switch part 40, a controller 50, a storage 60, a removal signal generator 70, a removal part 80, and a second output part 90.

The present device 1 is provided with, for example, a personal computer. In the present device 1, an information processing program according to the present invention (hereinafter referred to as "the present computer program") provides a sound signal processing method according to the below-mentioned present invention (hereinafter referred to as "the present method") in cooperation with hardware resources of the present device 1.

It should be noted that, causing a computer (not illustrated) to execute the present computer program can cause the computer to function in the same manner as the present device so as to cause the computer to execute the present method.

The first input part 10 is connected with a communication device 4 of the second base via a communication line 5, such as a communication cable, and receives a sound signal (hereinafter referred to as "reception signal") s2 from the second base. The first input part 10 is provided with, for example, a communication interface (I/F), such as a connector and/or a terminal, and an amplifier. The reception signal s2 from the first input part 10 is input to the first output part 20, the controller 50, and the removal signal generator 70.

The first output part 20 outputs the reception signal s2 from the first input part 10 and/or a reference signal s3 from the controller 50 to the loudspeaker 2. The first output part 20 is provided with, for example, an I/F and an amplifier. The first output part 20 is served as an output part in the present invention. The "reference signal s3" is a signal corresponding to reference sound (for example, white noise) emitted through the loudspeaker 2 when the present device 1 executes the below-mentioned present method. The reference signal s3 is generated by the controller 50.

The second input part 30 is connected with each of the microphones 3a to 3f, and receives signals from the respective microphones 3a to 3f. The second input part 30 is provided with, for example, an I/F, an amplifier, an AD converter, and a variable resistor. The second input part 30 is served as an input part in the present invention. The second input part 30 generates signals (hereinafter "individual transmission signal") s41, s42, s43, s44, s45, and s46 acquired by adjusting gain of the respective received signals, and generates a signal (hereinafter referred to as "transmission signal") s4 acquired by combining the individual transmission signals s41 to s46. Specifically, the second input part 30 combines the individual transmission signals s41 to s46, in other words, signals from the respective microphones 3a to 3f to generate a transmission signal s4. The second input part 30 includes seven transmission paths (not illustrated) corresponding to the generated transmission signal s4 and the respective individual transmission signals s41 to s46. The generated transmission signal s4 and the individual transmission signals s41 to s46 are input to the switch part 40. Hereinafter, when the individual transmission signals s41 to s46 are generically referred to without distinguishing them from each other, the individual transmission signals s41 to s46 are referred to as individual transmission signals s40.

Gain adjustment for the respective signals is executed using a publicly known gain sharing algorithm. The "gain-sharing" algorithm is an algorithm comparing the input from each of the microphones 3a to 3f with the sum total of the inputs (for example, comparing the input when the signal is input only from the microphone 3a with the input when signals are input from the microphones 3a to 3f) and adjusting the gain values g1, g2, g3, g4, g5, and g6 set for the transmission paths (amplifiers) of signals from the respective microphones 3a to 3f such that the total gain value G has a fixed value. In other words, gain sharing is an algorithm adjusting the gain values g1 to g6 corresponding to the respective microphones 3a to 3f such that the total gain value G of the transmission paths has a fixed value. The gain values g1 to g6 set for the respective transmission paths are stored in the storage 60. Hereinafter, when the gain values g1 to g6 are generically referred to without distinguishing them from each other, the gain values g1 to g6 are referred to as gain values g.

The transmission signal s4 and the individual transmission signals s41 to s46 are generated based on the signals from the respective microphones 3a to 3f, as described above. Specifically, the transmission signal s4 and the individual transmission signals s41 to s46 include a sound signal s1 and an echo signal es when the speaker at the first base is speaking, and include an echo signal es when the speaker at the first base is not speaking.

The switch part 40 switches the signal input from the second input part 30 to the controller 50 and/or the removal part 80, by switching the transmission path of the second input part 30 based on the switching signal from the controller 50. Specifically, the switch part 40 switches the signal input to the controller 50 and/or the removal part 80, among the individual transmission signals s40 corresponding to the six microphones 3a to 3f and the transmission signal s4. The switch part 40 is provided with, for example, a rotary switch or a slide switch. Operations of the switch part 40 will be described later.

The controller 50 executes, for example, calculation of coefficients required for the present device 1 to execute the below-mentioned present method, detection of the sound signal s1 and/or the reception signal s2, and measurement of echo return loss. The controller 50 is provided with, for example, a processor, such as a central processing unit (CPU), a micro processing unit (MPU), and a digital signal processor (DSP), and/or an integrated circuit, such as an application specific integrated circuit (ASIC) and a field programmable gate array (FPGA). Operations of the controller 50 and the echo return loss will be described later.

The storage 60 stores therein information required for the present device 1 to execute the below-mentioned present method. The storage 60 is provided with, for example, a recording device, such as a hard disk drive (HDD)and a solid state drive (SSD), and/or a semiconductor memory device, such as a random access memory (RAM) and a flash memory. The information stored in the storage 60 will be described later.

The removal signal generator 70 generates a removal signal s5 based on the reception signal s2 and a filter coefficient F. The removal signal generator 70 is, for example, a publicly known finite impulse response (FIR) filter. The "removal signal s5" is a signal that removes (suppresses) the echo signal es included in the transmission signal s4. Specifically, for example, the removal signal s5 is a signal of the same phase (or approximately equal to the same phase) as that of the echo signal es included in the transmission signal s4. Generation of the removal signal s5 with the removal signal generator 70 will be described later.

The "filter coefficient F" is a coefficient used by the removal signal generator 70 to execute FIR processing on the reception signal s2 and generate the removal signal s5. Specifically, the removal signal generator 70 executes FIR processing on the reception signal s2 based on the filter coefficient F and generates the removal signal s5. The filter coefficient F is calculated by the controller 50, as described above. Calculation of the filter coefficient F with the controller 50 will be described later.

The removal part 80 removes the echo signal es included in the transmission signal s4, based on the transmission signal s4 and the removal signal s5, and generates an echo removal signal s6. The removal part 80 is, for example, an arithmetic circuit, such as a subtraction circuit and an addition circuit. Generation of the echo removal signal s6 with the removal part 80 will be described later.

The "echo removal signal s6" is a signal acquired by removing (suppressing) the echo signal es from the transmission signal s4. The echo removal signal s6 includes the sound signal s1 and a residual echo signal res when the speaker at the first base is speaking, and includes a residual echo signal res when the speaker at the first base is not speaking. The "residual echo signal res" is a difference signal between the echo signal es and the removal signal s5. Specifically, for example, when the removal signal s5 has completely removed the echo signal es (when the echo signal es has the same phase as that of the removal signal s5), the signal level of the residual echo signal res generated by subtraction of the signals is "0". The echo removal signal s6 is input to the controller 50 and the second output part 90.

The second output part 90 is connected with the communication line 5, and outputs the echo removal signal s6 to the communication line 5. The second output part 90 is provided with, for example, an I/F and an amplifier. The echo removal signal s6 from the second output part 90 is input to the communication device 4 at the second base via the communication line 5.

### Sound Signal Processing Method

The present method will now be described.

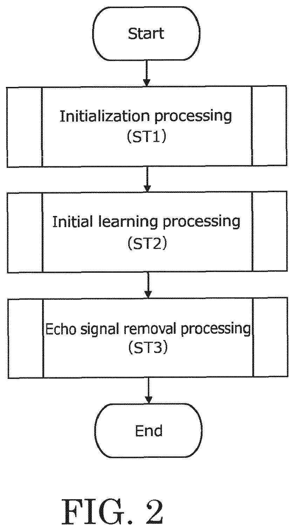

FIG. 2 is a flowchart illustrating an embodiment of the present method.

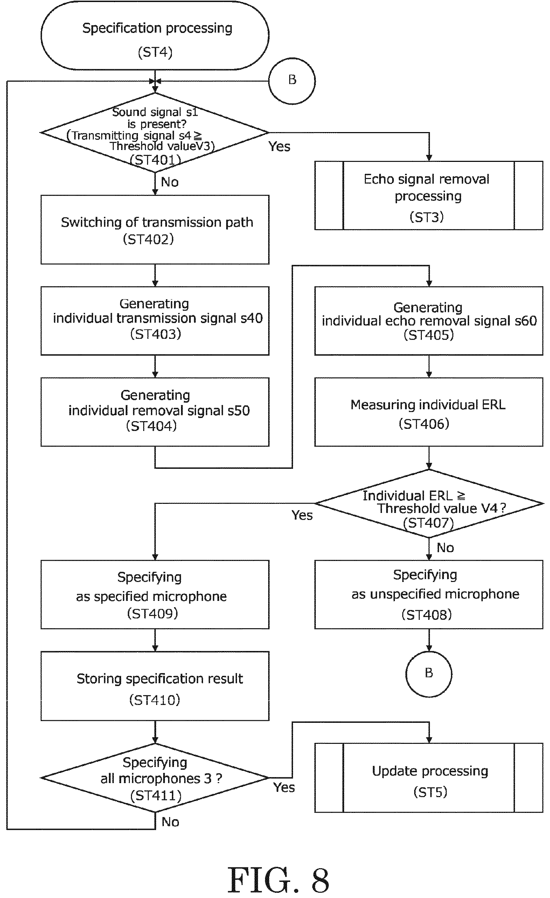

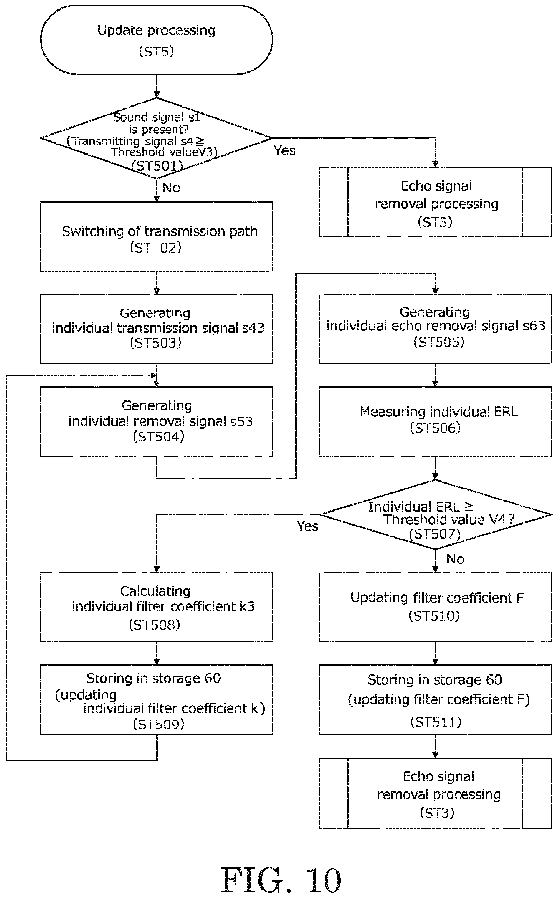

In the present method, the present device 1 executes initialization processing (ST1), initial learning processing (ST2), echo signal removal processing (ST3), the below-mentioned specification processing (ST4) (see FIG. 8), and the below-mentioned update processing (ST5) (see FIG. 10). In the present method, the present device 1 executes each of the processing (ST1 to ST5) to provide echo canceling supporting the six microphones 3 (six channels) with a common FIR filter (removal signal generator 70) and is automatically ready for environmental change as described later.

The present device 1 executes initialization processing (ST1) after the power of the present device 1 is turned on.

### Initialization Processing

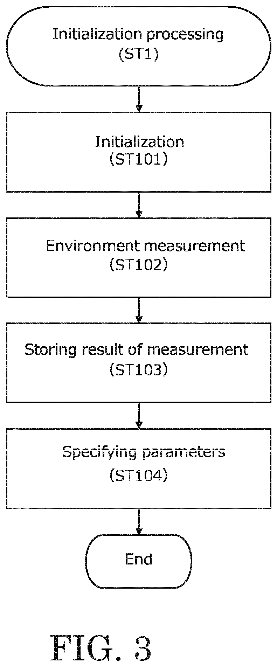

FIG. 3 is a flowchart of initialization processing (ST1).

The "initialization processing (ST1)" is processing to execute initialization of parameters and environment measurement.

First, the present device 1 executes initialization of parameters (ST101). The "parameters" is values set for the algorithm (adaptive algorithm) used for calculation of the below-described individual filter coefficient k.

Then, the present device 1 executes, using the controller 50, environment measurement for the first base in which the present device 1, the loudspeaker 2, and the microphones 3 are installed (ST102). The "environment measurement" is measurement of items (such as the reverberation time, the delay time, the maximum echo quantity, and background noise) relating to the transmission path (environment) of the echo component from the loudspeaker 2 to the microphones 3 in the first base in which the present device 1, the loudspeaker 2, and the microphones 3 are installed. The present device 1 outputs reference sound into the first base through the loudspeaker 2, and collects the echo component of the reference sound through the microphones 3. The controller 50 measures the reverberation time, the delay time, the maximum echo quantity, and the background noise. The environment measurement is executed for each of the microphones 3a to 3f.

The "reverberation time" is time required from the time at which the reference sound is output (emitted) into the first base and the output of the reference sound is stopped, to the time at which the energy density of its reverberation sound is attenuated by 60 dB. The "delay time" is time required for the microphones 3 to collect the reference sound output from the loudspeaker 2. The "maximum echo quantity" is the maximum quantity of the echo component collected by the microphones 3 in the first base. The "background noise" is a sound pressure level of noise (such as noise of the air conditioner and noise of automobiles outside the room) in the first base.

The present device 1 then stores a measurement result of environment measurement corresponding to the respective microphones 3a to 3f in the storage 60 (ST103).

The present device 1 then specifies parameters based on the measurement result of environment measurement corresponding to the respective microphones 3a to 3f (ST104). The parameters are specified by being newly calculated based on the measurement results of environment measurement. As another example, the parameters are specified by selection of one parameter group from a plurality of parameter groups stored in advance in the storage 60, based on the measurement results of environment measurement.

### Initial Learning Processing

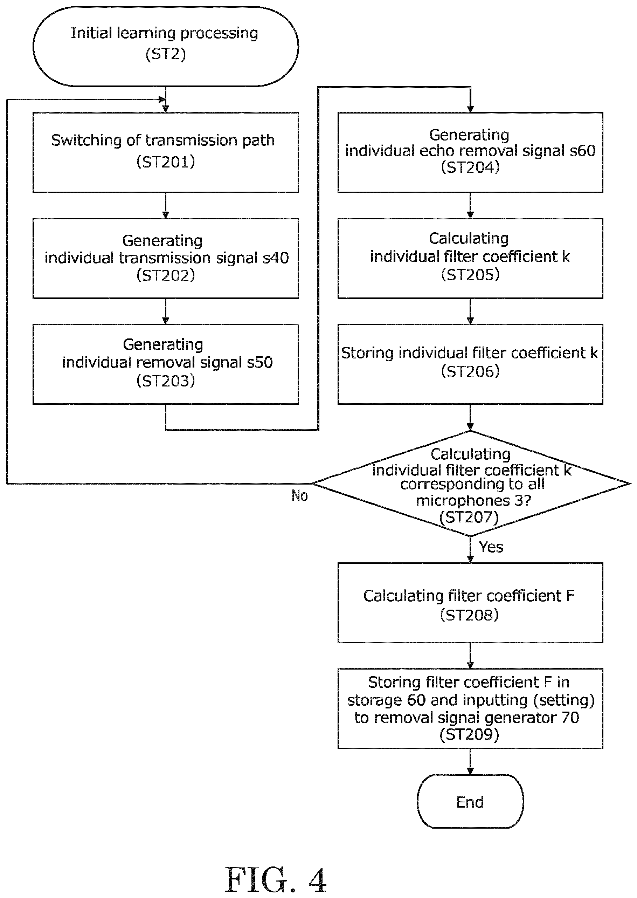

FIG. 4 is a flowchart of the initial learning processing (ST2).

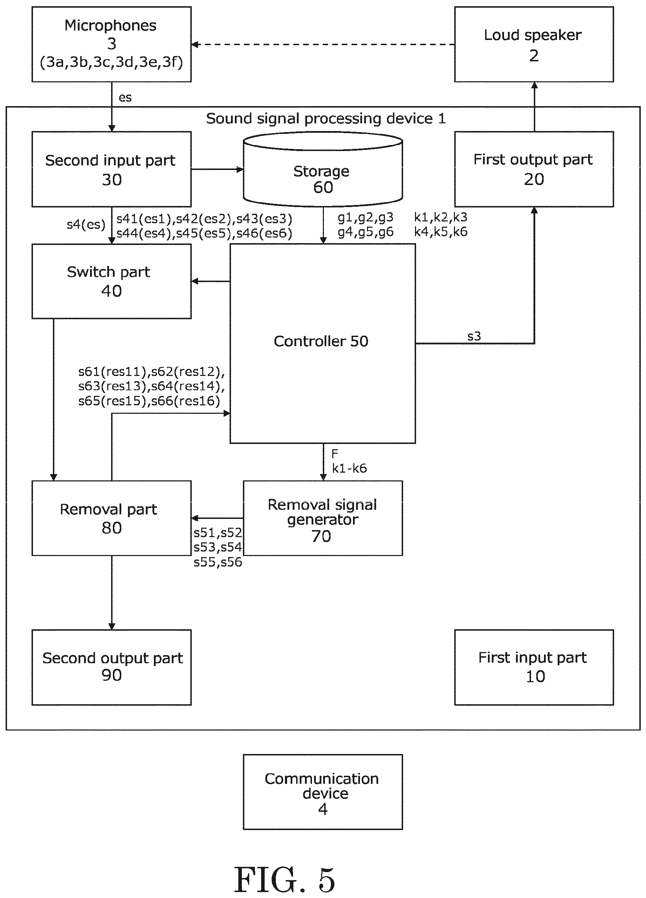

FIG. 5 is a functional block diagram illustrating flow of signals in the initial learning processing (ST2).

In FIG. 5, main flows in flows of signals in the initial learning processing (ST2) are denoted with arrows.

The "initial learning processing (ST2)" is processing to initially calculate (learn) the filter coefficient F with the present device 1, for example, after the power of the present device 1 is turned on.

First, the present device 1 switches the transmission path of the second input part 30 to the transmission path from the microphone 3a using the switch part 40 and the controller 50 (ST201). Switching of the transmission path with the switch part 40 is executed based on a switching signal from the controller 50.

Then, the present device 1 generates an individual transmission signal s41 corresponding to the microphone 3a using the second input part 30 (ST202). In the processing (ST202), the controller 50 generates a reference signal s3 and inputs the reference signal s3 to the first output part 20. The present device 1 outputs reference sound from the loudspeaker 2, and collects the echo component of the reference sound with the microphone 3 (microphone 3a) corresponding to the transmission path switched in the above-mentioned processing (ST201). The second input part 30 generates an individual transmission signal s41 corresponding to the microphone 3a based on the signal input from the microphone 3a. The individual transmission signal s41 includes an echo signal es corresponding to the echo component of the reference sound. The individual transmission signal s41 is input from the second input part 30 to the removal part 80 through the switch part 40.

The present device 1 then generates an individual removal signal s51 using the controller 50 and the removal signal generator 70 (ST203). The "individual removal signal s51" is a signal that removes the echo signal (hereinafter referred to as "individual echo signal") es1 included in the individual transmission signal s41. Hereinafter, when the individual removal signals s51 to s56 are generically referred to without distinguishing them from each other, the individual removal signals s51 to s56 are referred to as individual removal signals s50.

In the processing (ST203), the controller 50 reads an initial value of the individual filter coefficient k1 corresponding to the microphone 3a from the storage 60, and inputs (sets) the initial value to (in) the removal signal generator 70. The removal signal generator 70 calculates the individual removal signal s51 based on the reference signal s3 and the individual filter coefficient k1. The individual removal signal s51 is input to the removal part 80.

The "individual filter coefficient k1" is a transfer function of the acoustic transmission path reaching the microphone 3a from the loudspeaker 2. Specifically, the individual filter coefficient k1 is a coefficient used by the removal signal generator 70 to execute FIR processing for the reference signal and generate the individual removal signal s51. The "reference signal" is a basis of a signal for the removal signal generator 70 to generate an individual removal signal s51 based on the individual filter coefficient k1 (the reference signal is the reference signal s3 in the initial learning processing (ST2), and the reception signal s2 in the echo signal removal processing (ST3), the specification processing (ST4), and the update processing (ST5)).

The present device 1 then removes an individual echo signal es1 included in the individual transmission signal s41, and generates an individual echo removal signal s61 using the removal part 80 (ST204). In the processing (ST204), the removal part 80 generates an individual echo removal signal s61 based on the individual transmission signal s41 and the individual removal signal s51. The individual echo removal signal s61 is input from the removal part 80 to the controller 50 and the second output part 90. At this stage, the second output part 90 mutes the individual echo removal signal s61. As a result, the individual echo removal signal s61 is not transmitted to the second base.

It should be noted that the second output part may attenuate the individual echo removal signal, or mute the individual echo removal signal and transmit dummy noise (pink noise) to the second base.

The "individual echo removal signal s61" is a signal acquired by removing (suppressing) the individual echo signal es1 from the individual transmission signal s41. The individual echo removal signal s61 includes an individual residual echo signal res11. Hereinafter, when the individual echo removal signals s61 to s66 are generically referred to without distinguishing them from each other, the individual echo removal signals s61 to s66 are referred to as individual echo removal signals s60. The "individual residual echo signal res11" is a difference signal between the individual echo signal es1 and the individual removal signal s51. The removal part 80 generates the individual echo removal signal s61 by subtracting the individual removal signal s51 from the individual transmission signal s41. Hereinafter, when the individual residual echo signals res11 to res16 are generically referred to without distinguishing them from each other, the individual residual echo signals res11 to res16 are referred to as individual residual echo signals res10.

The present device 1 then calculates an individual filter coefficient k1 corresponding to the microphone 3a using the controller 50 (ST205). In the processing (ST205), the controller 50 reads, from the storage 60, a gain value g1 (corresponding to the microphone 3a) set for the transmission path of the signal from the microphone 3a. The controller 50 then calculates the individual filter coefficient k1 corresponding to the microphone 3a using the publicly known adaptive algorithm, based on the read gain value g1, the reference signal s3, and the individual echo removal signal s61 (that is, the individual residual echo signal res11 included in the individual echo removal signal s61).

The calculated individual filter coefficient k1 is stored in the storage 60 (ST206). As a result, the individual filter coefficient k1 stored in the storage 60 is updated from the initial value to the calculated value.

The present device 1 repeats the processing (ST201 to ST206) until the individual filter coefficients k1 to k6 corresponding to all the microphones 3a to 3f are calculated ("NO" at ST207). In the processing, as described above, the parameters of the adaptive algorithm are specified based on the measurement result of environment measurement corresponding to the respective microphones 3. In other words, the controller 50 calculates individual filter coefficients k corresponding to the respective microphones 3 based on the measurement results of environment measurement corresponding to the respective microphones 3.

When the individual filter coefficients k1 to k6 corresponding to all the microphones 3a to 3f are calculated ("YES" at ST207), the present device 1 calculates a filter coefficient F using the controller 50 (ST208). In the processing (ST208), the controller 50 reads, from the storage 60, the gain values g1 to g6 of the transmission paths of signals from the respective microphones 3a to 3f, and the individual filter coefficients k1 to k6 and calculates the filter coefficient F based on the gain values g1 to g6 and the individual filter coefficients k1 to k6. The filter coefficient F is calculated by combining the individual filter coefficients k1 to k6. Hereinafter, when the individual filter coefficients k1 to k6 are generically referred to without distinguishing them from each other, the individual filter coefficients k1 to k6 are referred to as individual filter coefficients k.

Composition of the individual filter coefficients k1 to k6 are executed by multiplying the individual filter coefficient k by the gain value g for each of the individual filter coefficients k1 to k6 corresponding to the respective microphones 3a to 3f, and adding the multiplication results. Specifically, the filter coefficient F is calculated by adding a value acquired by multiplying the individual filter coefficient k1 corresponding to the microphone 3a by the gain value g1, a value acquired by multiplying the individual filter coefficient k2 corresponding to the microphone 3b by the gain value g2, a value acquired by multiplying the individual filter coefficient k3 corresponding to the microphone 3c by the gain value g3, a value acquired by multiplying the individual filter coefficient k4 corresponding to the microphone 3d by the gain value g4, a value acquired by multiplying the individual filter coefficient k5 corresponding to the microphone 3e by the gain value g5, and a value acquired by multiplying the individual filter coefficient k6 corresponding to the microphone 3f by the gain value g6.

The calculated filter coefficient F is stored in the storage 60 and input to (set in) the removal signal generator 70 (ST209). As a result, the removal signal generator 70 can generate the removal signal s5 based on the filter coefficient F.

As described above, the present method calculates the filter coefficient F by calculating the individual filter coefficients k1 to k6 corresponding to the respective microphones 3a to 3f and combining the individual filter coefficients k1 to k6. Therefore, the present device 1 can remove echo signals es included in signals from the respective microphones 3a to 3f with one echo cancel part (corresponding to the controller 50, the removal signal generator 70, and the removal part 80) as opposed to a conventional device including echo cancel parts for respective microphones. Specifically, the present device 1 executes echo canceling with a common FIR filter (removal signal generator 70) for inputs from the six microphones 3a to 3f. Specifically, the present device 1 can remove echo signals es included in signals from the respective microphones 3a to 3f with a simple circuit configuration in comparison with a conventional device.

### Echo Signal Removal Processing

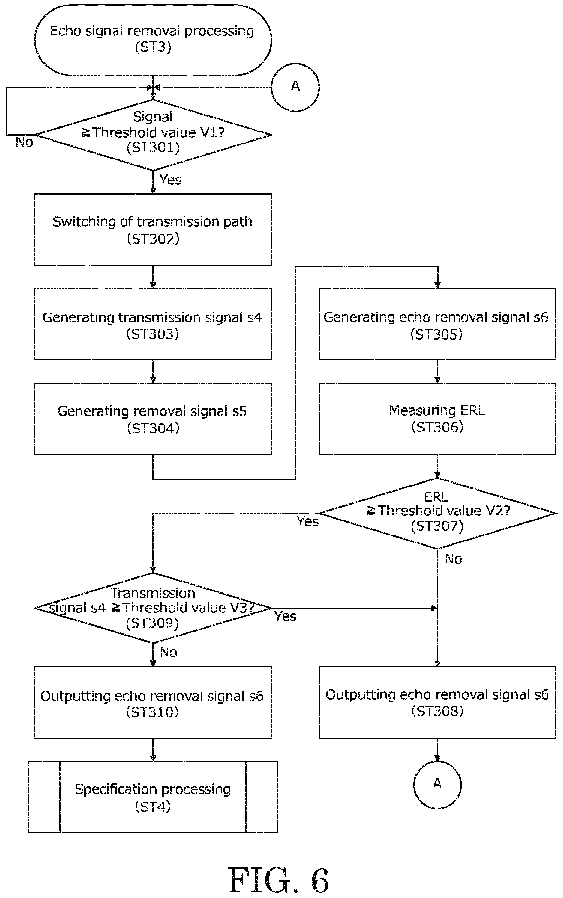

FIG. 6 is a flowchart of echo signal removal processing (ST3).

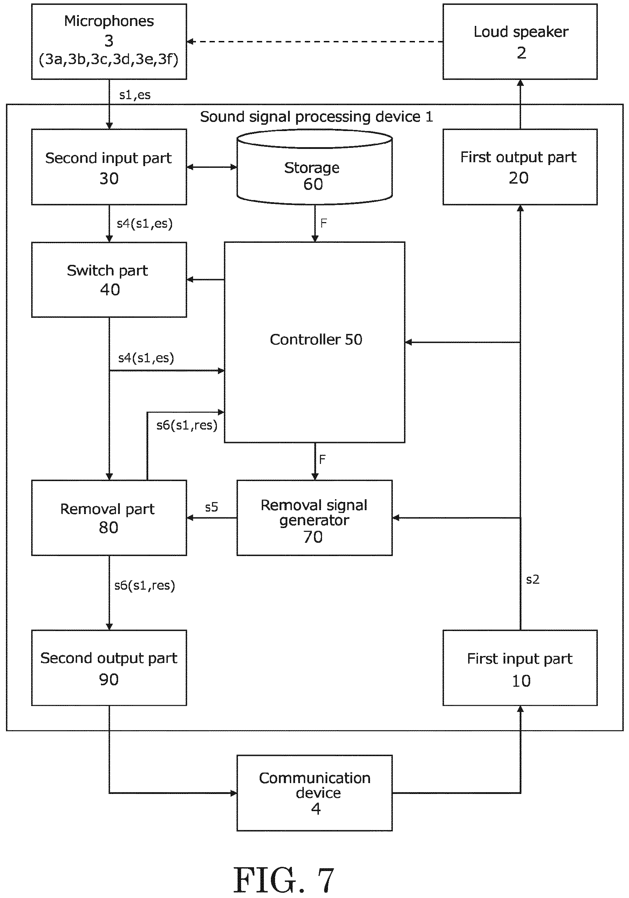

FIG. 7 is a functional block diagram illustrating flow of signals in the echo signal removal processing (ST3).

In FIG. 7, main flows in flows of signals in the echo signal removal processing (ST3) are denoted with arrows.

The "echo signal removal processing (ST3)" is processing to remove the echo signal es corresponding to the reception signal s2 from the transmission signal s4. The echo signal removal processing (ST3) is processing executed when the reception signal s2 is included in the signal received by the first input part 10, such as in a conference between the first base and the second base. As described above, the signal (reception signal s2) from the first input part 10 is input to the first output part 20, the controller 50, and the removal signal generator 70.

First, the present device 1 detects, using the controller 50, whether a reception signal s2 is included in the signal from the first input part 10, that is, presence/absence of the reception signal s2 (ST301). In the processing (ST301), the controller 50 compares, for example, the signal (signal level) from the first input part 10 with a predetermined threshold value V1, to detect presence/absence of a reception signal s2. When a reception signal s2 is present, the transmission signal s4 includes the echo signal es corresponding to the reception signal s2.

The "threshold value V1" is a threshold value used by the controller 50 to detect whether a reception signal s2 is included in the signal from the first input part 10. The threshold value V1 is stored in the storage 60.

When the signal (signal level) from the first input part 10 is smaller than the threshold value V1 (when no reception signal s2 is present) ("NO" at ST301), the present device 1 repeats detection of presence/absence of the reception signal s2.

In contrast, when the signal from the first input part 10 is equal to or larger than the threshold value V1 (when a reception signal s2 is present) ("YES" at ST301), the present device 1 switches the transmission path of the second input part 30 to the transmission path of the signal s4 using the switch part 40 and the controller 50 (ST302).

The present device 1 then generates a transmission signal s4 using the second input part 30 (ST303). The transmission signal s4 is input from the second input part 30 to the controller 50 and the removal part 80 via the switch part 40.

The present device 1 then generates a removal signal s5 using the controller 50 and the removal signal generator 70 (ST304). In the processing (ST304), the controller 50 reads the filter coefficient F from the storage 60 and inputs (sets) the filter coefficient F to (in) the removal signal generator 70. The removal signal generator 70 generates a removal signal s5 from the reception signal s2 based on the filter coefficient F input from the controller 50. The filter coefficient F is the filter coefficient F calculated in the initial learning processing (ST2), or the filter coefficient F calculated and updated in the below-mentioned update processing (ST5).

The present device 1 then removes the echo signal es included in the transmission signal s4 and generates an echo removal signal s6 using the removal part 80 (ST305). In the processing (ST305), the removal part 80 generates an echo removal signal s6 based on the transmission signal s4 and the removal signal s5. The echo removal signal s6 is input to the controller 50 and the second output part 90.

The present device 1 then measures echo return loss (ERL) using the controller 50 (ST306).

The "ERL" is a level difference between the transmission signal s4 and the echo removal signal s6, that is, magnitude (signal level) of the residual echo signal res included in the echo removal signal s6. The ERL is influenced by, for example, change in installation location of the microphones 3 and/or fluctuations in output level of the loudspeaker 2. Specifically, for example, the ERL deteriorates when the position of the microphones 3 is moved by the speaker and the transmission path of the echo component is changed (environmental change). The controller 50 measures the ERL based on the signal level of the transmission signal s4 and the signal level of the echo removal signal s6. Specifically, the controller 50 measures the ERL by subtracting the signal level of the echo removal signal s6 from the signal level of the transmission signal s4.

The present device 1 then compares the measured ERL with a predetermined threshold value V2 using the controller 50 (ST307). The "threshold value V2" is a threshold value indicating whether removal of the echo signal es with the present device 1 is sufficient (whether the signal level of the residual echo signal res is large). Specifically, when removal of the echo signal es with the present device 1 is insufficient, the ERL is equal to or larger than the threshold value V2 (deteriorates). In contrast, when removal of the echo signal es with the present device 1 is sufficient, the ERL is smaller than the threshold value V2. The threshold value V2 is a reference value in the present invention. The threshold value V2 is stored in the storage 60.

When the ERL is smaller than the threshold value V2 ("NO" at ST307), the present device 1 outputs the echo removal signal s6 to the communication device 4 at the second base using the second output part 90 (ST308). The process of the present device 1 then returns to the processing (ST301).

In contrast, when the ERL is equal to or larger than the threshold value V2 ("YES" at ST307), the present device 1 detects whether a sound signal s1 is included in the transmission signal s4 (presence/absence of a sound signal s1), using the controller 50 (ST309). In the processing (ST309), the controller 50 detects presence/absence of a sound signal s1 by, for example, comparing the transmission signal s4 (signal level) from the second input part 30 with a predetermined threshold value V3.

The "threshold value V3" is a threshold value used by the controller 50 to detect whether a sound signal s1 is included in the transmission signal s4 from the second input part 30. The threshold value V3 is stored in the storage 60.

When the signal level of the transmission signal s4 is equal to or larger than the threshold value V3 (when a sound signal s1 is present) ("YES" at ST309), the present device 1 outputs the echo removal signal s6 to the communication device 4 at the second base using the second output part 90 (ST308). The process of the present device 1 then returns to the processing (ST301).

In contrast, when the signal level of the transmission signal s4 is smaller than the threshold value V3 (when no sound signal s1 is present) ("NO" at ST309), the present device 1 outputs the echo removal signal s6 to the communication device 4 at the second base using the second output part 90 (ST310), and executes the specification processing (ST4).

As described above, when the ERL is equal to or larger than the threshold value V2, the present device 1 executes the specification processing (ST4) at a timing when a reception signal s2 is present and no sound signal s1 is present. Specifically, the present device 1 executes the specification processing (ST4) when an echo signal es is included in the transmission signal s4 and no sound signal s1 is included in the transmission signal s4, based on a comparison result between the ERL and the threshold value V2. In other words, the present device 1 executes the specification processing (ST4) when the present device 1 senses environmental change during execution of the echo signal removal processing (ST3).

It should be noted that when the value of the ERL is measured as a negative value, the threshold value V2 is a negative value. In this case, the present device can reverse comparison in value between the ERL and the threshold value V2 at the above-mentioned processing (ST307). Specifically, for example, when the ERL being a negative value is equal to or smaller than the threshold value V2, the present device may detect whether a sound signal is included in the transmission signal (presence/absence of a sound signal) using the controller.

### Specification Processing

FIG. 8 is a flowchart of the specification processing (ST4).

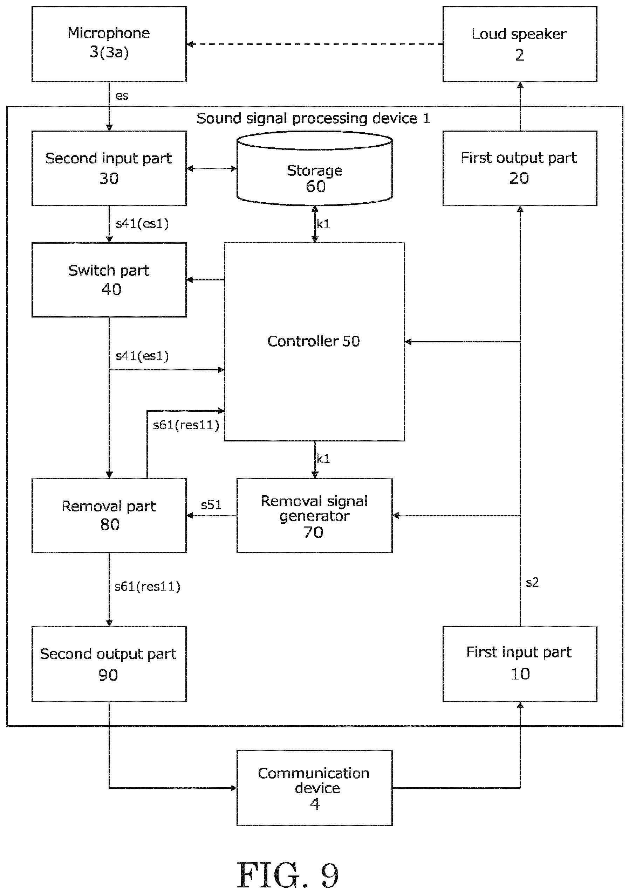

FIG. 9 is a functional block diagram illustrating flow of signals in the specification processing (ST4).

In FIG. 9, main flows in flows of signals in the specification processing (ST4) are denoted with arrows. FIG. 9 illustrates only signals corresponding to signals from the microphone 3a among the microphones 3a to 3f, for convenience' sake.

The "specification processing (ST4)" is processing to specify each of the microphones 3 as a specified microphone or an unspecified microphone. The "specified microphone" is a microphone 3 with a corresponding individual filter coefficient k that is improper (shifted). Specifically, the specified microphone is a microphone 3 that is a target of update of the individual filter coefficient k. Deterioration of the ERL is caused by shift of the filter coefficient F with respect to the echo signal es. Specifically, deterioration of the ERL is caused by shift of the individual filter coefficients k1 to k6 with respect to the individual echo signals es1 to es6. Therefore, the individual filter coefficient k corresponding to the specified microphone requires update to a proper value. The "unspecified microphone" is a microphone 3 with a corresponding individual filter coefficient k that is proper (not shifted), that is, a microphone 3 that is not a target of update of the individual filter coefficient k.

First, the present device 1 detects, using the controller 50, whether a sound signal s1 is included in the transmission signal s4 (presence/absence of a sound signal s1) (ST401). Detection of presence/absence of a sound signal s1 (ST401) is the same processing as detection of presence/absence of a sound signal s1 (ST309) at the echo signal removal processing (ST3).

When no sound signal s1 is included in the transmission signal s4 (when a sound signal s1 is not present) ("NO" at ST401), the present device 1 switches the transmission path of the second input part 30 to the transmission path of the signal from the microphone 3a using the switch part 40 and the controller 50 (ST402).

The present device 1 then generates an individual transmission signal s41 using the second input part 30 based on the signal from the microphone 3a (ST403). The individual transmission signal s41 is input to the removal part 80 through the switch part 40.

The present device 1 then generates an individual removal signal (specified removal signal) s51 using the controller 50 and the removal signal generator 70 (ST404). In the processing (ST404), the controller 50 reads, from the storage 60, the individual filter coefficient k1 corresponding to the microphone 3a, and inputs the individual filter coefficient k1 to the removal signal generator 70. The removal signal generator 70 generates an individual removal signal s51 based on the reception signal s2 and the individual filter coefficient k1. The individual removal signal s51 is input to the removal part 80.

The present device 1 then removes the individual echo signal es1 included in the individual transmission signal s41 using the removal part 80, and generates an individual echo removal signal s61 (ST405). In the processing (ST405), the removal part 80 generates an individual echo removal signal s61 based on the individual transmission signal s41 and the individual removal signal s51. The individual echo removal signal s61 is input to the controller 50 and the second output part 90 from the removal part 80.

The present device 1 then measures an individual ERL using the controller 50 (ST406).

The "individual ERL" is a difference in level between the individual transmission signal s41 and the individual echo removal signal s61. Specifically, the individual ERL is magnitude (signal level) of the individual residual echo signal res11 included in the individual echo removal signal s61. The controller 50 measures the individual ERL based on the signal level of the individual transmission signal s41 and the signal level of the individual echo removal signal s61. Specifically, the controller 50 measures the individual ERL by subtracting the signal level of the individual echo removal signal s61 from the signal level of the individual transmission signal s41.

The present device 1 then compares the measured individual ERL with a predetermined threshold value V4 using the controller 50 (ST407).

The "threshold value V4" is a threshold value indicating whether removal of the individual echo signal es1 with the present device 1 is sufficient (whether the signal level of the individual residual echo signal res11 is large). Specifically, when removal of the individual echo signal es1 with the present device 1 is insufficient, the individual ERL is equal to or larger than the threshold value V4 (deteriorates). In contrast, when removal of the individual echo signal es1 with the present device 1 is sufficient, the individual ERL is smaller than the threshold value V4. The threshold value V4 is an individual reference value in the present invention. The threshold value V4 is stored in the storage 60.

When the individual ERL is smaller than the threshold value V4 ("NO" at ST407), the present device 1 specifies the microphone 3a as an unspecified microphone (ST408). In contrast, when the individual ERL is equal to or larger than the threshold value V4 ("YES" at ST407), the present device 1 specifies the microphone 3a as a specified microphone (ST409). The specification result is stored in the storage 60 (ST410). In this state, the individual echo removal signal s61 is output from the second output part 90.

The present device 1 repeats the processing (ST401 to ST410) for the signals from the other microphones 3b to 3f until all the microphones 3a to 3f are specified as specified microphones or unspecified microphones ("NO" at ST411). Specifically, the present device 1 inputs each of the individual transmission signals s42 to s46 corresponding to the other microphones 3b to 3f to the removal part 80 while switching the signals s42 to s46 using the switch part 40, and determines whether each of the microphones 3a to 3f is a specified microphone or an unspecified microphone.

The present device 1 executes update processing (ST5) when each of the microphones 3a to 3f is specified as a specified microphone or an unspecified microphone ("YES" at ST411). In this state, the microphones 3 are provided with specified microphones and unspecified microphones.

When a sound signal s1 is included in the transmission signal s4 (when a sound signal s1 is present) ("YES" at ST401), the present device 1 ends (suspends) the specification processing (ST4), and executes the echo signal removal processing (ST3). Specifically, when the controller 50 detects a sound signal s1 before the specification processing (ST4) is finished, the present device 1 suspends the specification processing (ST4), and executes the echo signal removal processing (ST3). When the specification processing (ST4) is suspended, and the sound signal s1 is determined not to be included in the transmission signal s4 in the echo signal removal processing (ST3), the present device 1 executes (resumes) the specification processing (ST4) from the suspended processing (processing on the signal from the microphone 3 that has not been specified as a specified microphone or an unspecified microphone). Specifically, for example, when the processing is suspended at point in time when the specification processing (ST4) are executed on the microphones 3a to 3d among the microphones 3a to 3f, the present device 1 resumes the processing from the specification processing (ST4) on the microphone 3e.

It should be noted that when the specification processing is suspended, the present device may execute the specification processing from the first, that is, the specification processing for all the microphones.

When the value of the individual ERL is measured as a negative value, the threshold value V4 is a negative value. In this case, the present device may reverse comparison in value between the individual ERL and the threshold value V4 in the processing (ST407) described above. Specifically, for example, when the individual ERL being a negative value is equal to or smaller than the threshold value V4, the present device may specify the microphone 3 corresponding to the individual ERL as a specified microphone.

As described above, the present device 1 determines specified microphones that is the target of update of the individual filter coefficient k, and unspecified microphones that is not the target of update of the individual filter coefficient k from the microphones 3a to 3f, based on comparison results between the individual ERL and the individual reference value (threshold value V4). Specifically, the present device 1 determines specified microphones at a timing at which an echo signal es is included in the transmission signal s4 and no sound signal s1 is included in the transmission signal s4, when the ERL deteriorates. Therefore, the present device 1 restricts microphones 3 requiring update of the individual filter coefficient k, and reduces the time and the processing load required for update of the individual filter coefficients k and update of the filter coefficient F.

### Update Processing

FIG. 10 is a flowchart of the update processing (ST5).

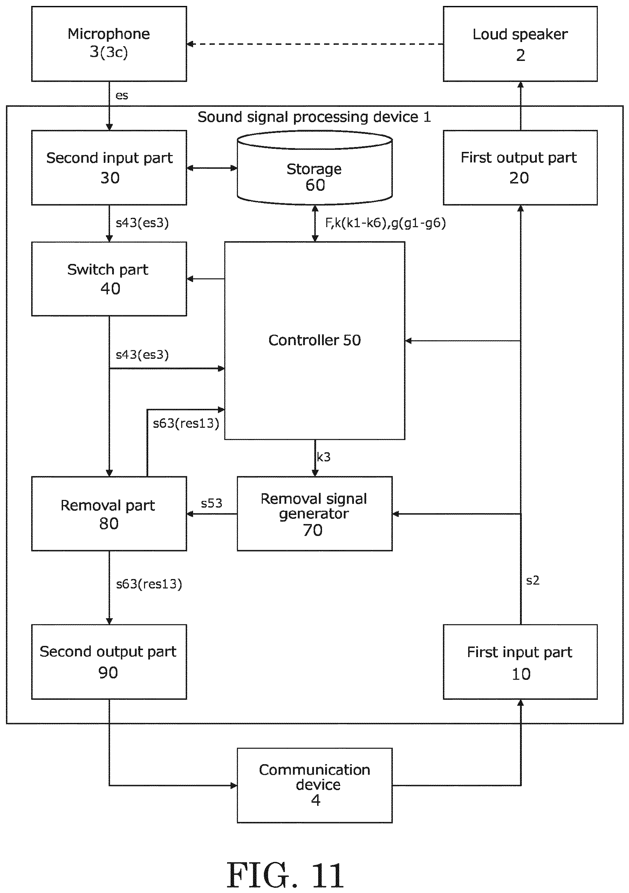

FIG. 11 is a functional block diagram illustrating flow of signals in the update processing (ST5).

In FIG. 11, main flows in flows of signals in the update processing (ST5) are denoted with arrows. FIG. 11 illustrates only signals corresponding to the signal from the microphone 3c.

The "update processing (ST5)" is processing to update the filter coefficient F by updating the individual filter coefficient k corresponding to the microphone 3 specified as a specified microphone. Specifically, for example, when the microphone 3a is specified as a specified microphone, the present device 1 updates the filter coefficient F by updating the individual filter coefficient k1 corresponding to the microphone 3a. When the microphones 3e and 3f are specified as specified microphones, the present device 1 updates the filter coefficient F by updating the individual filter coefficients k5 and k6 corresponding to the microphones 3e and 3f. The case where the microphone 3c is specified as a specified microphone will now be described as an example.

First, the present device 1 detects whether a sound signal s1 is included in the transmission signal s4 (or individual transmission signal s43) (presence/absence of a sound signal s1) using the controller 50 (ST501). Detection of presence/absence of a sound signal s1 (ST501) is the same processing as detection of presence/absence of a sound signal s1 (ST309) at the echo signal removal processing (ST3).

First, the present device 1 switches the transmission path of the second input part 30 to the transmission path of the signal from the specified microphone (microphone 3c) using the switch part 40 and the controller 50 (ST502).

Then, the present device 1 generates an individual transmission signal s43 based on the signal from the specified microphone (microphone 3c) (ST503).

Then, the present device 1 generates an individual removal signal s53 using the controller 50 and the removal signal generator 70 (ST504). In the processing (ST504), the controller 50 reads, from the storage 60, the individual filter coefficient k3 corresponding to the specified microphone, and inputs the individual filter coefficient k3 to the removal signal generator 70. The removal signal generator 70 generates an individual removal signal s53 based on the reception signal s2 and the individual filter coefficient k3. The individual removal signal s53 is a specified removal signal in the present invention. The individual removal signal s53 is input to the removal part 80.

The present device 1 then removes the individual echo signal es3 included in the individual transmission signal s43 using the removal part 80, and generates an individual echo removal signal s63 (ST505). The individual echo removal signal s63 is a specified echo removal signal in the present invention. The individual echo removal signal s63 is input to the controller 50 and the second output part 90.

The present device 1 then measures the individual echo return loss (individual ERL) using the controller 50 (ST506).

The present device 1 then compares the measured individual ERL with the predetermined threshold value V4 using the controller 50 (ST507).

When the individual ERL is equal to or larger than the threshold value V4 ("YES" at ST507), the present device 1 calculates an individual filter coefficient k3 using the controller 50 (ST508). In the processing (ST508), the controller 50 reads, from the storage 60, the gain value g3 set for the transmission path of the signal from the specified microphone. The controller 50 calculates an individual filter coefficient k3 based on the read gain value g3, the individual echo removal signal s63 (that is, the individual residual echo signal res13 included in the individual (specified) echo removal signal s63), the reception signal s2, and the environment measurement result.

The present device 1 then stores the calculated individual filter coefficient k3 in the storage 60. Specifically, the present device 1 updates the individual filter coefficient k3 stored in the storage 60 (ST509). The process of the present device 1 then returns to the processing (ST504).

In contrast, when the individual ERL is smaller than the threshold value V4 ("NO" at ST507), the present device 1 updates the filter coefficient F stored in the storage 60 using the controller 50 (ST510). In the processing (ST510), the controller 50 reads, from the storage 60, the updated individual filter coefficient k3 corresponding to the specified microphone, the individual filter coefficients k1, k2, and k4 to k6 corresponding to the unspecified microphones, and the gain values g1 to g6 set for the respective transmission paths, and calculates the filter coefficient F. The filter coefficient F is calculated in the same manner as the processing (ST208) of the initial learning processing (ST2).

The present device 1 then stores the calculated filter coefficient F in the storage 60. Specifically, the present device 1 updates the filter coefficient F stored in the storage 60 (ST511). The process of the present device 1 then returns to the echo signal removal processing (ST3).

As described above, the present device 1 specifies the microphone 3 having the deteriorated individual ERL as a specified microphone in the specification processing (ST4), and executes update processing (ST5) only for the specified microphone. As a result, the processing load required for update of the filter coefficient F is reduced, and the processing time is shortened.

In addition, the present device 1 always compares the ERL with the threshold value V2 (that is, monitors the ERL) in the echo signal removal processing (ST3). When the ERL is equal to or larger than the threshold value V2, the present device 1 executes the specification processing (ST4) and the update processing (ST5) at a timing at which an echo signal es is included in the transmission signal s4 and no sound signal s1 is included in the transmission signal s4. In the specification processing (ST4), the present device 1 compares the individual ERL with the threshold value V4 for each of the microphones 3. When the individual ERL is equal to or larger than the threshold value V4, the present device 1 determines a specified microphone that is the target of update of the individual filter coefficient k. In the update processing (ST5), the present device 1 calculates an individual filter coefficient k corresponding to the specified microphone, based on the reception signal s2 and the individual residual echo signal res10 included in the individual echo removal signal (specified echo removal signal) s60. The present device 1 calculates and updates the filter coefficient F based on the individual filter coefficient k corresponding to the specified microphone and the individual filter coefficients k corresponding to the unspecified microphones.

### Conclusion

According to the embodiment described above, the controller 50 calculates the individual filter coefficients k1 to k6 corresponding to the respective microphones 3a to 3f, and calculates the filter coefficient F by combining the individual filter coefficients k1 to k6. The removal signal generator 70 generates a removal signal s5 based on the calculated filter coefficient F. The removal part 80 removes the echo signal es (generates an echo removal signal s6) included in the transmission signal s4, based on the transmission signal s4 and the removal signal s5. Therefore, the present device 1 can remove echo signals es included in the signals from a plurality of microphones 3 (multi-channels) with a common FIR filter (removal signal generator 70), as opposed to a conventional device including echo cancel parts corresponding to the respective microphones. Specifically, the present device 1 provides a simple circuit configuration in comparison with a conventional device. That is, the present device 1 removes echo signals es included in signals from a plurality of microphones 3, with a simple circuit configuration of using a common FIR filter.

In addition, according to the embodiment described above, the controller 50 calculates (updates) the filter coefficient F, when no sound signal s1 is included in the transmission signal s4 and an echo signal es is included in the transmission signal s4 (when a reception signal s2 is present). Therefore, the present device 1 reduces the processing load of calculation (update) of the filter coefficient F, in comparison with a conventional device that always calculates (updates) the filter coefficient.

In addition, according to the embodiment described above, the switch part 40 inputs each of the individual transmission signals s41 to s46 to the controller 50 while switching the individual transmission signals s41 to s46, when no sound signal s1 is included in the transmission signal s4 and an echo signal es is included in the transmission signal s4 (when a reception signal s2 is present). The controller 50 calculates individual filter coefficients k1 to k6 corresponding to the respective microphones 3a to 3f, based on the signals from the respective microphones 3a to 3f. Specifically, the present device 1 calculates the individual filter coefficients k1 to k6 while switching the individual transmission signals s41 to s46 with the switch part 40. Therefore, the present device 1 can calculate individual filter coefficients k1 to k6 corresponding to the six microphones 3a to 3f with a common FIR filter (removal signal generator 70). Specifically, the present device 1 calculates individual filter coefficients k corresponding to a plurality of microphones 3 with a simple circuit configuration, and calculates a filter coefficient F based on the individual filter coefficients k. As a result, the present device 1 removes echo signals es included in signals from a plurality of microphones 3 with a simple circuit configuration.

In addition, according to the embodiment described above, the controller 50 calculates the individual filter coefficients k, based on the reception signal s2 and the individual residual echo signal res10 included in the individual echo removal signal s60. Specifically, the present device 1 improves the accuracy of the filter coefficient F and securely removes (suppresses) the echo signal es from the transmission signal s4, by repeatedly calculating the individual filter coefficient k such that the individual residual echo signal res10 becomes approximately equal to "0".

In addition, according to the embodiment described above, the controller 50 updates the individual filter coefficients k1 to k6 based on the gain values g1 to g6 corresponding to the respective microphones 3a to 3f. Therefore, the present device 1 can calculate the individual filter coefficients k1 to k6 using the gain values g1 to g6 at the time when the microphones 3a to 3f have collected the echo components. As a result, the present device 1 can securely improve the accuracy of the filter coefficient F and remove (suppress) the echo signal es from the transmission signal s4.

In addition, according to the embodiment described above, the controller 50 always measures the ERL in the echo signal removal processing (ST3). The controller 50 then updates the filter coefficient F stored in the storage 60, when the ERL is equal to or larger than the reference value (threshold value V2) and no sound signal s1 is included in the transmission signal s4. Specifically, the present device 1 senses environmental change at a timing at which the ERL deteriorates, and updates the filter coefficient F. Specifically, the present device 1 reduces the processing load of calculation (update) of the filter coefficient F, in comparison with a conventional device that always calculates (updates) the filter coefficient F.

In addition, according to the embodiment described above, the controller 50 measures the individual ERLs based on a comparison result between the ERL and the reference value (threshold value V2). As a result, the present device 1 detects shift (deterioration in the removal and suppression effect for the echo signal es) of the filter coefficient F from the measurement results of ERLs corresponding to the respective microphones 3a to 3f, when the ERL deteriorates.

In addition, according to the embodiment described above, the controller 50 determines a specified microphone that is the target of update of the individual filter coefficient k among the microphones 3a to 3f, based on comparison results between the individual ERL and the individual reference value (threshold value V4). Specifically, the present device 1 reduces the time and the processing load necessary for update of the individual filter coefficients k and update of the filter coefficient F, by determining a specified microphone when the ERL deteriorates.

In addition, according to the embodiment described above, the controller 50 calculates the individual filter coefficient k of the specified microphone. The controller 50 then updates the filter coefficient F stored in the storage 60, based on the calculated individual filter coefficient k of the specified microphone and the individual filter coefficients k of the unspecified microphones. Therefore, the present device 1 updates the filter coefficient F by calculating (updating) only the individual filter coefficient k of the specified microphone. Specifically, the present device 1 reduces the time and the processing load necessary for update of the individual filter coefficients k and update of the filter coefficient F.

In addition, according to the embodiment described above, the controller 50 executes environment measurement for each of the microphones 3, and calculates the individual filter coefficient k based on the measurement result of the environment measurement. Therefore, the present device 1 can calculate the filter coefficient F in accordance with the environment of the room (space) in which the present device 1 is installed.

As described above, according to the embodiment described above, the present device 1 calculates the filter coefficient F based on the initialization processing (ST1) and the initial learning processing (ST2), and executes echo canceling based on the filter coefficient F (executes the echo signal removal processing (ST3)). When the present device 1 senses environmental change during execution of the echo signal removal processing (ST3), the present device 1 provides automatic adjustment of the filter coefficient F by executing the specification processing (ST4) and the update processing (ST5). As a result, the present device 1 executes multi-channel echo cancelling with a common filter, and executes echo canceling automatically following environmental change.

It should be noted that the number of microphones connected with the second input part may be any number larger than 1, and not limited to **"6".**

In the embodiment described above, the present device 1 has a configuration including a pair of the removal signal generator 70 and the removal part 80. Therefore, the removal signal generator 70 is exclusively used for generation of the individual removal signal s50 in the specification processing (ST4) and the update processing (ST5). As a result, the present device 1 does not execute the echo signal removal processing (ST3) simultaneously with the specification processing (ST4) and the update processing (ST5).

Instead of the configuration, the present device may include two pairs of removal signal generators and removal parts, a pair of a removal signal generator and a removal part used for the echo signal removal processing and a pair of a removal signal generator and a removal part used for the specification processing and the update processing.

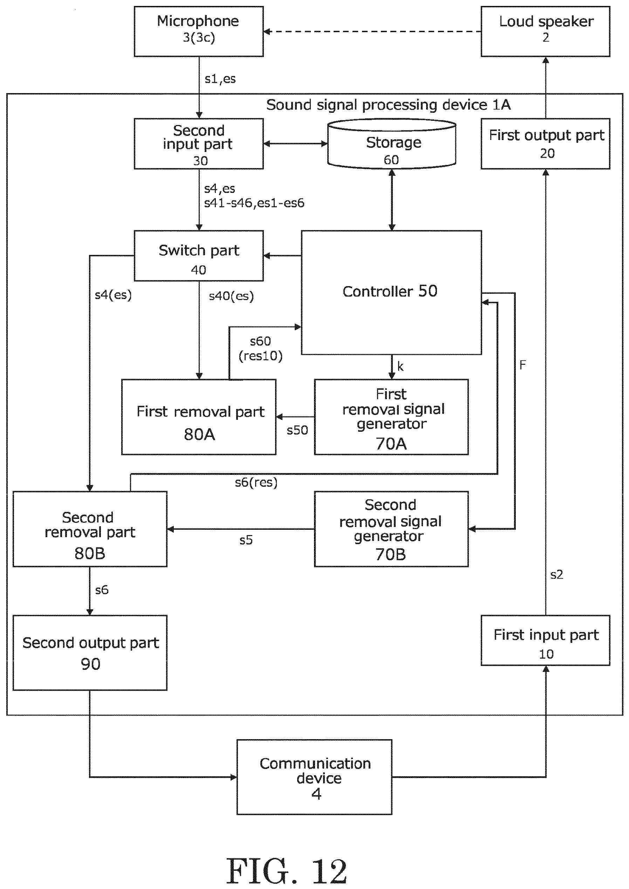

FIG. 12 is a functional block diagram illustrating another embodiment of the present device.

FIG. 12 illustrates that the present device 1A is a sound signal processing device including a first removal signal generator 70A, a second removal signal generator 70B, a first removal part 80A, and a second removal part 80B. The first removal signal generator 70A and the first removal part 80A execute the specification processing (ST4) and the update processing (ST5). The second removal signal generator 70B and the second removal part 80B execute the echo signal removal processing (ST3).

With this configuration, the present device 1A can execute the echo signal removal processing (ST3) simultaneously with the specification processing (ST4) and the update processing (ST5). Therefore, the present device 1A can remove (suppress) the echo signals es included in signals from two or more microphones 3, with a simple circuit configuration including two echo canceller parts.

## Claims

1. A sound signal processing device (1) comprising:
an output part (20) configured to output a reception signal (s2);
an input part (30) configured to combine signals input from each of a plurality of microphones (3) and to generate a transmission signal (s4), wherein the microphones (3) are configured to collect an echo component of the reception signal (s2) and voice of a speaker and to generate an echo signal (es) corresponding to the echo component and a sound signal (s1) corresponding to the voice of the speaker;
a removal signal generator (70) configured to generate a removal signal (s5) for removing the echo signal (es) included in the transmission signal (s4), based on a filter coefficient F;
a controller (50) configured to calculate the filter coefficient F;
a removal part (80) configured to generate an echo removal signal (s6) based on the transmission signal (s4) and the removal signal (s5); and
a switch part (40) configured to switch the signal input to the removal part (80) in individual transmission signals (s40) corresponding to the respective microphones (3), wherein
the controller (50) is configured to calculate individual filter coefficients (k) corresponding to the respective microphones (3), and to calculate the filter coefficient F by combining the individual filter coefficients (k), and
the input part (30) is configured to generate the individual transmission signals (s40) corresponding to the respective microphones (3) based on the signals input from the respective microphones (3), and to generate the transmission signal (s4) by combining the individual transmission signals (s40), and
the switch part (40) is configured to input the individual transmission signals (s40) corresponding to the respective microphones (3) to the removal part (80) while switching the individual transmission signals (s40), when the sound signal (s1) is not included in the transmission signal (s4).

2. The sound signal processing device (1) according to claim 1, wherein the controller (50) is configured to calculate the filter coefficient F when the sound signal (s1) is not included in the transmission signal (s4).

3. The sound signal processing device (1) according to claim 2, wherein the controller (50) is configured to calculate the filter coefficient F when the echo signal (es) is included in the transmission signal (s4).

4. The sound signal processing device (1) according to claim 1, wherein the removal signal generator (70) is configured to generate the removal signal (s5) based on the reception signal (s2) and the filter coefficient F.

5. The sound signal processing device (1) according to claim 1, wherein the switch part (40) is configured to input the individual transmission signals (s40) corresponding to the respective microphones (3) to the removal part (80) while switching the individual transmission signals (s40), when the echo signal (es) is included in the transmission signal (s4).

6. The sound signal processing device (1) according to claim 1, wherein
the removal signal generator (70) is configured to generate individual removal signals (s50) that remove the echo signals (es) included in the individual transmission signals (s40),
the removal part (80) is configured to generate individual echo removal signals (s60) based on the individual transmission signals (s40) and the individual removal signals (s50), and
the controller (50) is configured to calculate the individual filter coefficients (k) based on the reception signal (s2) and individual residual echo signals (res) included in the individual echo removal signals (s60).

7. The sound signal processing device (1) according to claim 6, wherein the controller (50) is configured to calculate the individual filter coefficients (k) based on gain values corresponding to the respective microphones (3).

8. The sound signal processing device (1) according to claim 1, further comprising:
a storage (60) configured to store therein the filter coefficient F, wherein
the controller (50) is configured to update the filter coefficient F stored in the storage (60), when the sound signal (s1) is not included in the transmission signal (s4).

9. The sound signal processing device (1) according to claim 8, wherein
the storage (60) is configured to store therein a reference value, and
the controller (50) is configured to:
measure an echo return loss based on a signal level of the transmission signal (s4) and a signal level of the echo removal signal (s6), and
update the filter coefficient F based on a comparison result between the echo return loss and the reference value.

10. The sound signal processing device (1) according to claim 9, wherein the controller (50) is configured to measure individual echo return losses corresponding to the respective microphones (3) based on the comparison result.

11. The sound signal processing device (1) according to claim 10, wherein
the storage (60) is configured to store therein individual reference values, and
the controller (50) is configured to:
compare the individual echo return loss with the individual reference value for each of the microphones (3), and
determine a specified microphone (3) which is a target of update of the individual filter coefficient (k) among the microphones (3) based on comparison results between the individual echo return losses and the individual reference values.

12. The sound signal processing device (1) according to claim 11, wherein
the microphones (3) include:
the specified microphone (3); and
an unspecified microphone (3) different from the specified microphone, wherein
the removal signal generator (70) is configured to generate a specified removal signal which removes the echo signal (es) included **in** the signal from the specified microphone (3), based on the individual filter coefficient (k) corresponding to the specified microphone (3),
the removal part (80) is configured to generate a specified echo removal signal based on the signal from the specified microphone and the specified removal signal, and
the controller (50) is configured to:
calculate the individual filter coefficient (k) corresponding to the specified microphone (3) based on the reception signal (s2) and an individual residual echo signal (res10) included **in** the specified echo removal signal, and
update the filter coefficient F stored **in** the storage (60), based on the individual filter coefficients (k) corresponding to the unspecified microphone (3) and the individual filter coefficient (k) corresponding to the specified microphone (3).

13. The sound signal processing device (1) according to claim 1, wherein
the controller (50) is configured to:
execute environment measurement for each of the microphones (3), and
calculate the individual filter coefficients (k) based on results of the environment measurement corresponding to the respective microphones (3).

14. A sound signal processing program causing a computer to function as the sound signal processing device (1) according to any one of claims 1 to 13.

15. A sound signal processing method executed by a sound signal processing device (1) including:
an output part (20) that outputs a reception signal (s2);
an input part (30) that combines signals input from each of a plurality of microphones (3) and generates a transmission signal (s4), wherein the microphones (3) collect an echo component of the reception signal (s2) and voice of a speaker and generate an echo signal (es) corresponding to the echo component and a sound signal (s1) corresponding to the voice of the speaker;
a removal signal generator (70) that generates a removal signal (s5) removing the echo signal (es) included in the transmission signal (s4), based on a filter coefficient F;
a controller (50) that calculates the filter coefficient F;
a removal part (80) that generates an echo removal signal (s6) based on the transmission signal (s4) and the removal signal (s5); and
a switch part (40) that switches the signal input to the removal part (80) in individual transmission signals (s40) corresponding to the respective microphones (3),
the method comprising:
calculating individual filter coefficients (k) corresponding to the respective microphones (3) with the controller (50);
calculating the filter coefficient F by combining the individual filter coefficients (k) with the controller (50);
generating the individual transmission signals (s40) corresponding to the respective microphones (3) based on the signals input from the respective microphones (3) with the input part (30);
generating the transmission signal (s4) by combining the individual transmission signals (s40) with the input part (30); and
inputting the individual transmission signals (s40) corresponding to the respective microphones (3) to the removal part (80) while switching the individual transmission signals (s40) with the switch part (40), when the sound signal (s1) is not included in the transmission signal (s4).

16. The sound signal processing method according to claim 15, wherein the controller (50) executes the calculating the individual filter coefficients (k) when the echo signal (es) is included in the transmission signal (s4) and the sound signal (s1) is not included in the transmission signal (s4).

17. The sound signal processing method according to claim 15, wherein
the sound signal processing device (1) includes a storage (60) that stores therein the filter coefficient F, and
the controller (50) updates the filter coefficient F stored in the storage (60) when the sound signal (s1) is not included in the transmission signal (s4).

18. The sound signal processing method according to claim 17, wherein
the storage (60) stores therein a reference value and individual reference values, and
the controller (50):
measures, for each of the microphones (3), an echo return loss based on a signal level of the transmission signal (s4) and a signal level of the echo removal signal (s6),
measures individual echo return losses corresponding to the respective microphones (3) based on a comparison result between the echo return loss and the reference value,
determines a specified microphone (3) which is a target of update of the individual filter coefficient (k) among the microphones (3) based on comparison results between the individual echo return losses and the individual reference values, and
updates the filter coefficient F.

## Patentansprüche

1. Schallsignalverarbeitungsvorrichtung (1), die Folgendes umfasst:
einen Ausgabeteil (20), der dazu konfiguriert ist, ein Empfangssignal (s2) auszugeben;
einen Eingabeteil (30), der dazu konfiguriert ist, Signale, die von jedem einer Vielzahl von Mikrofonen (3) eingegeben werden, zu kombinieren und ein Übertragungssignal (s4) zu erzeugen, wobei die Mikrofone (3) dazu konfiguriert sind, eine Echokomponente des Empfangssignals (s2) und die Stimme eines Sprechers zu sammeln und ein Echosignal (es), das der Echokomponente entspricht, und ein Schallsignal (s1), das der Stimme des Sprechers entspricht, zu erzeugen;
einen Entfernungssignalgenerator (70), der dazu konfiguriert ist, basierend auf einem Filterkoeffizienten F ein Entfernungssignal (s5) zum Entfernen des Echosignals (es), das in dem Übertragungssignal (s4) beinhaltet ist, zu erzeugen;
eine Steuereinheit (50), die dazu konfiguriert ist, den Filterkoeffizienten F zu berechnen;
einen Entfernungsteil (80), der dazu konfiguriert ist, basierend auf dem Übertragungssignal (s4) und dem Entfernungssignal (s5) ein Echosignal-Entfernungssignal (s6) zu erzeugen; und
einen Umschaltteil (40), der dazu konfiguriert ist, das Signal, das in den Entfernungsteil (80) eingegeben wird, in einzelne Übertragungssignale (s40) umzuschalten, die den jeweiligen Mikrofonen (3) entsprechen, wobei die Steuereinheit (50) dazu konfiguriert ist, einzelne Filterkoeffizienten (k), die den jeweiligen Mikrofonen (3) entsprechen, zu berechnen, und den Filterkoeffizienten F durch Kombinieren der einzelnen Filterkoeffizienten (k) zu berechnen, und
wobei der Eingabeteil (30) dazu konfiguriert ist, basierend auf den Signalen, die von den jeweiligen Mikrofonen (3) eingegeben werden, die einzelnen Übertragungssignale (s40), die den jeweiligen Mikrofonen (3) entsprechen, zu erzeugen und das Übertragungssignal (s4) durch Kombinieren der einzelnen Übertragungssignale (s40) zu erzeugen, und
wobei der Umschaltteil (40) dazu konfiguriert ist, die einzelnen Übertragungssignale (s40), die den jeweiligen Mikrofonen (3) entsprechen, in den Entfernungsteil (80) einzugeben, während die einzelnen Übertragungssignale (s40) umgeschaltet werden, wenn das Schallsignal (s1) nicht in dem Übertragungssignal (s4) beinhaltet ist.

2. Schallsignalverarbeitungsvorrichtung (1) nach Anspruch 1, wobei die Steuereinheit (50) dazu konfiguriert ist, den Filterkoeffizienten F zu berechnen, wenn das Schallsignal (s1) nicht in dem Übertragungssignal (s4) beinhaltet ist.

3. Schallsignalverarbeitungsvorrichtung (1) nach Anspruch 2, wobei die Steuereinheit (50) dazu konfiguriert ist, den Filterkoeffizienten F zu berechnen, wenn das Echosignal (es) in dem Übertragungssignal (s4) beinhaltet ist.

4. Schallsignalverarbeitungsvorrichtung (1) nach Anspruch 1, wobei der Entfernungssignalgenerator (70) dazu konfiguriert ist, das Entfernungssignal (s5) basierend auf dem Empfangssignal (s2) und dem Filterkoeffizienten F zu erzeugen.

5. Schallsignalverarbeitungsvorrichtung (1) nach Anspruch 1, wobei der Umschaltteil (40) dazu konfiguriert ist, die einzelnen Übertragungssignale (s40), die den jeweiligen Mikrofonen (3) entsprechen, in den Entfernungsteil (80) einzugeben, während die einzelnen Übertragungssignale (s40) umgeschaltet werden, wenn das Echosignal (es) in dem Übertragungssignal (s4) beinhaltet ist.

6. Schallsignalverarbeitungsvorrichtung (1) nach Anspruch 1, wobei der Entfernungssignalgenerator (70) dazu konfiguriert ist, einzelne Entfernungssignale (s50) zu erzeugen, die die Echosignale (es) entfernen, die in den einzelnen Übertragungssignalen (s40) beinhaltet sind, wobei der Entfernungsteil (80) dazu konfiguriert ist, einzelne Echoentfernungssignale (s60) basierend auf den einzelnen Übertragungssignalen (s40) und den einzelnen Entfernungssignalen (s50) zu erzeugen, und die Steuereinheit (50) dazu konfiguriert ist, die einzelnen Filterkoeffizienten (k) basierend auf dem Empfangssignal (s2) und den einzelnen Restechosignalen (res), die in den einzelnen Echoentfernungssignalen (s60) beinhaltet sind, zu berechnen.

7. Schallsignalverarbeitungsvorrichtung (1) nach Anspruch 6, wobei die Steuereinheit (50) dazu konfiguriert ist, die einzelnen Filterkoeffizienten (k) basierend auf Verstärkungswerten, die den jeweiligen Mikrofonen (3) entsprechen, zu berechnen.

8. Schallsignalverarbeitungsvorrichtung (1) nach Anspruch 1, die weiter Folgendes umfasst:
einen Speicher (60), der dazu konfiguriert ist, darin den Filterkoeffizienten F zu speichern, wobei die Steuereinheit (50) dazu konfiguriert ist, den Filterkoeffizienten F, der in dem Speicher (60) gespeichert ist, zu aktualisieren, wenn das Schallsignal (s1) nicht in dem Übertragungssignal (s4) beinhaltet ist.

9. Schallsignalverarbeitungsvorrichtung (1) nach Anspruch 8, wobei der Speicher (60) dazu konfiguriert ist, darin einen Referenzwert zu speichern, und die Steuereinheit (50) konfiguriert ist zum:
Messen einer Echo-Rückflussdämpfung basierend auf einem Signalpegel des Übertragungssignals (s4) und einem Signalpegel des Echoentfernungssignals (s6), und den Filterkoeffizienten F basierend auf einem Vergleichsergebnis zwischen der Echo-Rückflussdämpfung und dem Referenzwert zu aktualisieren.

10. Schallsignalverarbeitungsvorrichtung (1) nach Anspruch 9, wobei die Steuereinheit (50) dazu konfiguriert ist, die einzelnen Echo-Rückflussdämpfungen, die den jeweiligen Mikrofonen (3) entsprechen, basierend auf dem Vergleichsergebnis zu messen.

11. Schallsignalverarbeitungsvorrichtung (1) nach Anspruch 10, wobei der Speicher (60) dazu konfiguriert ist, darin einen einzelnen Referenzwert zu speichern, und die Steuereinheit (50) konfiguriert ist zum:
Vergleichen der einzelnen Echo-Rückflussdämpfung mit dem einzelnen Referenzwert für jedes der Mikrofone (3), und Bestimmen eines spezifizierten Mikrofons (3), das ein Aktualisierungsziel des einzelnen Filterkoeffizienten (k) unter den Mikrofonen (3) ist, basierend auf Vergleichsergebnissen zwischen den einzelnen Echo-Rückflussdämpfungen und den einzelnen Referenzwerten.

12. Schallsignalverarbeitungsvorrichtung (1) nach Anspruch 11, wobei die Mikrofone (3) Folgendes beinhalten:
das spezifizierte Mikrofon (3); und
ein nicht spezifiziertes Mikrofon (3), das sich von dem spezifizierten Mikrofon unterscheidet, wobei der Entfernungssignalgenerator (70) dazu konfiguriert ist, ein spezifiziertes Entfernungssignal zu erzeugen, das das Echosignal (es), das in dem Signal von dem spezifizierten Mikrofon (3) beinhaltet ist, basierend auf dem einzelnen Filterkoeffizienten (k), der dem spezifizierten Mikrofon (3) entspricht, entfernt, wobei der Entfernungsteil (80) dazu konfiguriert ist, ein spezifiziertes Echoentfernungssignal basierend auf dem Signal von dem spezifizierten Mikrofon und dem spezifizierten Entfernungssignal zu erzeugen, und die Steuereinheit (50) dazu konfiguriert ist:
den einzelnen Filterkoeffizienten (k), der dem spezifizierten Mikrofon (3) entspricht, basierend auf dem Empfangssignal (s2) und einem einzelnen Restechosignal (res10), das in dem spezifizierten Echoentfernungssignal beinhaltet ist, zu berechnen und den Filterkoeffizienten F, der in dem Speicher (60) gespeichert ist, basierend auf den einzelnen Filterkoeffizienten (k), die dem nicht spezifizierten Mikrofon (3) entsprechen und dem einzelnen Filterkoeffizienten (k), der dem spezifizierten Mikrofon (3) entspricht, zu aktualisieren.

13. Schallsignalverarbeitungsvorrichtung (1) nach Anspruch 1, wobei die Steuereinheit (50) konfiguriert ist zum:
Ausführen von Umgebungsmessung für jedes der Mikrofone (3) und Berechnen der einzelnen Filterkoeffizienten (k) basierend auf Ergebnissen der Umgebungsmessung, die den jeweiligen Mikrofonen (3) entspricht.

14. Schallsignalverarbeitungsprogramm, das einen Computer veranlasst, als die Schallsignalverarbeitungsvorrichtung (1) nach einem der Ansprüche 1 bis 13 zu arbeiten.

15. Schallsignalverarbeitungsverfahren, das von einer Schallsignalverarbeitungsvorrichtung (1) ausgeführt wird, die Folgendes beinhaltet:
einen Ausgabeteil (20), der ein Empfangssignal (s2) ausgibt;
einen Eingabeteil (30), der Signale, die von jedem einer Vielzahl von Mikrofonen (3) eingegeben werden kombiniert und ein Übertragungssignal (s4) erzeugt, wobei die Mikrofone (3) dazu konfiguriert sind, eine Echokomponente des Empfangssignals (s2) und die Stimme eines Sprechers zu sammeln und ein Echosignal (es), das der Echokomponente entspricht, und ein Schallsignal (s1), das der Stimme des Sprechers entspricht, zu erzeugen;
einen Entfernungssignalgenerator (70), der basierend auf einem Filterkoeffizienten F ein Entfernungssignal (s5) erzeugt, das das Echosignal (es), das in dem Übertragungssignal (s4) beinhaltet ist, entfernt;
eine Steuereinheit (50), die den Filterkoeffizienten F berechnet;
einen Entfernungsteil (80), der basierend auf dem Übertragungssignal (s4) und dem Entfernungssignal (s5) ein Echosignal-Entfernungssignal (s6) erzeugt; und
einen Umschaltteil (40), der das Signal, das in den Entfernungsteil (80) eingegeben wird, in einzelne Übertragungssignale (s40) umschaltet, die den jeweiligen Mikrofonen (3) entsprechen, wobei das Verfahren Folgendes umfasst:
Berechnen einzelner Filterkoeffizienten (k), die den jeweiligen Mikrofonen (3) entsprechen, mit der Steuereinheit (50);
Berechnen des Filterkoeffizienten F durch Kombinieren der einzelnen Filterkoeffizienten (k) mit der Steuereinheit (50);
Erzeugen der einzelnen Übertragungssignale (s40), die den jeweiligen Mikrofonen (3) entsprechen, basierend auf den Signalen, die von den jeweiligen Mikrofonen (3) eingegeben werden, mit dem Eingabeteil (30);
Erzeugen des Übertragungssignals (s4) durch Kombinieren der einzelnen Übertragungssignale (s40) mit dem Eingabeteil (30); und
Eingeben der einzelnen Übertragungssignale (s40), die den jeweiligen Mikrofonen (3) entsprechen, in den Entfernungsteil (80), während die einzelnen Übertragungssignale (s40) mit dem Umschaltteil (40) umgeschaltet werden, wenn das Schallsignal (s1) nicht in dem Übertragungssignal (s4) beinhaltet ist.

16. Schallsignalverarbeitungsverfahren nach Anspruch 15, wobei die Steuereinheit (50) das Berechnen der einzelnen Filterkoeffizienten (k) ausführt, wenn das Echosignal (es) in dem Übertragungssignal (s4) beinhaltet ist, und das Schallsignal (s1) nicht in dem Übertragungssignal (s4) beinhaltet ist.

17. Schallsignalverarbeitungsverfahren nach Anspruch 15, wobei die Schallsignalverarbeitungsvorrichtung (1) einen Speicher (60) beinhaltet, der darin den Filterkoeffizienten F speichert, und die Steuereinheit (50) den Filterkoeffizienten F, der in dem Speicher (60) gespeichert ist, aktualisiert, wenn das Schallsignal (s1) nicht in dem Übertragungssignal (s4) beinhaltet ist.

18. Schallsignalverarbeitungsverfahren nach Anspruch 17, wobei der Speicher (60) darin einen Referenzwert und einzelne Referenzwerte speichert, und die Steuereinheit (50):
für jedes der Mikrofone (3) eine Echo-Rückflussdämpfung basierend auf einem Signalpegel des Übertragungssignals (s4) und einem Signalpegel des Echoentfernungssignals (s6) misst, einzelne Echo-Rückflussdämpfungen, die den jeweiligen Mikrofonen (3) entsprechen, basierend auf einem Vergleichsergebnis zwischen der Echo-Rückflussdämpfung und dem Referenzwert misst, ein spezifiziertes Mikrofon (3), das ein Aktualisierungsziel des einzelnen Filterkoeffizienten (k) unter den Mikrofonen (3) ist, basierend auf den Vergleichsergebnissen zwischen den einzelnen Echo-Rückflussdämpfungen und den einzelnen Referenzwerten bestimmt und den Filterkoeffizienten F aktualisiert.

## Revendications

1. Dispositif de traitement de signal sonore (1), comprenant :
une partie de sortie (20) configurée pour délivrer en sortie un signal de réception (s2) ;
une partie d'entrée (30) configurée pour combiner des signaux entrés depuis chaque microphone d'une pluralité de microphones (3) et pour générer un signal d'émission (s4), les microphones (3) étant configurés pour collecter une composante d'écho du signal de réception (s2) et la voix d'un locuteur et pour générer un signal d'écho (es) correspondant à la composante d'écho et un signal sonore (s1) correspondant à la voix du locuteur ;
un générateur de signal de suppression (70) configuré pour générer un signal de suppression (s5) pour supprimer le signal d'écho (es) compris dans le signal d'émission (s4), sur la base d'un coefficient de filtre F ;
un dispositif de commande (50) configuré pour calculer le coefficient de filtre F ;
une partie de suppression (80) configurée pour générer un signal de suppression d'écho (s6) sur la base du signal d'émission (s4) et du signal de suppression (s5) ; et
une partie de commutation (40) configurée pour commuter le signal entré dans la partie de suppression (80) dans des signaux d'émission individuels (s40) correspondant aux microphones (3) respectifs, le dispositif de commande (50) étant configuré pour calculer des coefficients de filtre (k) individuels correspondant aux microphones (3) respectifs, et pour calculer le coefficient de filtre F en combinant les coefficients de filtre (k) individuels, et la partie d'entrée (30) étant configurée pour générer les signaux d'émission (s40) individuels correspondant aux microphones (3) respectifs sur la base des signaux entrés depuis les microphones (3) respectifs, et pour générer le signal d'émission (s4) en combinant les signaux d'émission (s40) individuels, et
la partie de commutation (40) étant configurée pour entrer les signaux d'émission (s40) individuels correspondant aux microphones (3) respectifs dans la partie de suppression (80) tout en commutant les signaux d'émission (s40) individuels, lorsque le signal sonore (s1) n'est pas compris dans le signal d'émission (s4).

2. Dispositif de traitement de signal sonore (1) selon la revendication 1, le dispositif de commande (50) étant configuré pour calculer le coefficient de filtre F lorsque le signal sonore (s1) n'est pas compris dans le signal d'émission (s4).

3. Dispositif de traitement de signal sonore (1) selon la revendication 2, le dispositif de commande (50) étant configuré pour calculer le coefficient de filtre F lorsque le signal d'écho (es) est compris dans le signal d'émission (s4).

4. Dispositif de traitement de signal sonore (1) selon la revendication 1, le générateur de signal de suppression (70) étant configuré pour générer le signal de suppression (s5) sur la base du signal de réception (s2) et du coefficient de filtre F.

5. Dispositif de traitement de signal sonore (1) selon la revendication 1, la partie de commutation (40) étant configurée pour entrer les signaux d'émission (s40) individuels correspondant aux microphones (3) respectifs dans la partie de suppression (80) tout en commutant les signaux d'émission (s40) individuels, lorsque le signal d'écho (es) est compris dans le signal d'émission (s4).

6. Dispositif de traitement de signal sonore (1) selon la revendication 1, le générateur de signal de suppression (70) étant configuré pour générer des signaux de suppression (s50) individuels qui suppriment les signaux d'écho (es) compris dans les signaux d'émission (s40) individuels, la partie de suppression (80) étant configurée pour générer des signaux de suppression d'écho (s60) individuels sur la base des signaux d'émission (s40) individuels et des signaux de suppression (s50) individuels, et le dispositif de commande (50) étant configuré pour calculer les coefficients de filtre (k) individuels sur la base du signal de réception (s2) et de signaux d'écho résiduel (res) individuels compris dans les signaux de suppression d'écho (s60) individuels.

7. Dispositif de traitement de signal sonore (1) selon la revendication 6, le dispositif de commande (50) étant configuré pour calculer les coefficients de filtre (k) individuels sur la base de valeurs de gain correspondant aux microphones (3) respectifs.

8. Dispositif de traitement de signal sonore (1) selon la revendication 1, comprenant en outre :
un stockage (60) configuré pour y stocker le coefficient de filtre F, le dispositif de commande (50) étant configuré pour mettre à jour le coefficient de filtre F stocké dans le stockage (60), lorsque le signal sonore (s1) n'est pas compris dans le signal d'émission (s4).

9. Dispositif de traitement de signal sonore (1) selon la revendication 8, le stockage (60) étant configuré pour y stocker une valeur de référence, et le dispositif de commande (50) étant configuré pour :
mesurer un affaiblissement d'écho sur la base d'un niveau de signal du signal d'émission (s4) et d'un niveau de signal du signal de suppression d'écho (s6), et mettre à jour le coefficient de filtre F sur la base d'un résultat de comparaison entre l'affaiblissement d'écho et la valeur de référence.

10. Dispositif de traitement de signal sonore (1) selon la revendication 9, le dispositif de commande (50) étant configuré pour mesurer des affaiblissements d'écho individuels correspondant aux microphones (3) respectifs sur la base du résultat de comparaison.

11. Dispositif de traitement de signal sonore (1) selon la revendication 10, le stockage (60) étant configuré pour y stocker des valeurs de référence individuelles, et le dispositif de commande (50) étant configuré pour :
comparer l'affaiblissement d'écho individuel à la valeur de référence individuelle pour chacun des microphones (3), et déterminer un microphone (3) spécifié qui est une cible de mise à jour du coefficient de filtre (k) individuel parmi les microphones (3) sur la base de résultats de comparaison entre les affaiblissements d'écho individuels et les valeurs de référence individuelles.

12. Dispositif de traitement de signal sonore (1) selon la revendication 11, les microphones (3) comprenant :
le microphone (3) spécifié ; et
un microphone (3) non spécifié différent du microphone spécifié, le générateur de signal de suppression (70) étant configuré pour générer un signal de suppression spécifié qui supprime le signal d'écho (es) compris dans le signal provenant du microphone (3) spécifié, sur la base du coefficient de filtre (k) individuel correspondant au microphone (3) spécifié, la partie de suppression (80) étant configurée pour générer un signal de suppression d'écho spécifié sur la base du signal provenant du microphone spécifié et du signal de suppression spécifié, et le dispositif de commande (50) étant configuré pour :
calculer le coefficient de filtre (k) individuel correspondant au microphone (3) spécifié sur la base du signal de réception (s2) et d'un signal d'écho résiduel (res10) individuel compris dans le signal de suppression d'écho spécifié, et mettre à jour le coefficient de filtre F stocké dans le stockage (60), sur la base des coefficients de filtre (k) individuels correspondant au microphone (3) non spécifié et du coefficient de filtre (k) individuel correspondant au microphone (3) spécifié.

13. Dispositif de traitement de signal sonore (1) selon la revendication 1, le dispositif de commande (50) étant configuré pour :
exécuter une mesure d'environnement pour chacun des microphones (3), et calculer les coefficients de filtre (k) individuels sur la base de résultats de la mesure d'environnement correspondant aux microphones (3) respectifs.

14. Programme de traitement de signal sonore amenant un ordinateur à fonctionner en guise de dispositif de traitement de signal sonore (1) selon l'une quelconque des revendications 1 à 13.

15. Procédé de traitement de signal sonore exécuté par un dispositif de traitement de signal sonore (1) comprenant :
une partie de sortie (20) qui délivre en sortie un signal de réception (s2);
une partie d'entrée (30) qui combine des signaux entrés depuis chaque microphone d'une pluralité de microphones (3) et qui génère un signal d'émission (s4), les microphones (3) collectant une composante d'écho du signal de réception (s2) et la voix d'un locuteur et générant un signal d'écho (es) correspondant à la composante d'écho et un signal sonore (s1) correspondant à la voix du locuteur ;
un générateur de signal de suppression (70) qui génère un signal de suppression (s5) supprimant le signal d'écho (es) compris dans le signal d'émission (s4), sur la base d'un coefficient de filtre F;
un dispositif de commande (50) qui calcule le coefficient de filtre F ;
une partie de suppression (80) qui génère un signal de suppression d'écho (s6) sur la base du signal d'émission (s4) et du signal de suppression (s5) ; et
une partie de commutation (40) qui commute le signal entré dans la partie de suppression (80) dans des signaux d'émission individuels (s40) correspondant aux microphones (3) respectifs, le procédé consistant à :
calculer des coefficients de filtre (k) individuels correspondant aux microphones (3) respectifs avec le dispositif de commande (50) ;
calculer le coefficient de filtre F en combinant les coefficients de filtre (k) individuels avec le dispositif de commande (50) ;
générer les signaux d'émission (s40) individuels correspondant aux microphones (3) respectifs sur la base des signaux entrés depuis les microphones (3) respectifs avec la partie d'entrée (30) ;
générer le signal d'émission (s4) en combinant les signaux d'émission (s40) individuels avec la partie d'entrée (30) ; et
entrer les signaux d'émission (s40) individuels correspondant aux microphones (3) respectifs dans la partie de suppression (80) tout en commutant les signaux d'émission (s40) individuels avec la partie de commutation (40), lorsque le signal sonore (s1) n'est pas compris dans le signal d'émission (s4).

16. Procédé de traitement de signal sonore selon la revendication 15, le dispositif de commande (50) exécutant le calcul des coefficients de filtre (k) individuels lorsque le signal d'écho (es) est compris dans le signal d'émission (s4) et que le signal sonore (s1) n'est pas compris dans le signal d'émission (s4).

17. Procédé de traitement de signal sonore selon la revendication 15, le dispositif de traitement de signal sonore (1) comprend un stockage (60) qui y stocke le coefficient de filtre F, et le dispositif de commande (50) mettant à jour le coefficient de filtre F stocké dans le stockage (60), lorsque le signal sonore (s1) n'est pas compris dans le signal d'émission (s4).

18. Procédé de traitement de signal sonore selon la revendication 17, le stockage (60) y stockant une valeur de référence et des valeurs de référence individuelles, et le dispositif de commande (50) :
mesurant, pour chacun des microphones (3), un affaiblissement d'écho sur la base d'un niveau de signal du signal d'émission (s4) et d'un niveau de signal du signal de suppression d'écho (s6), mesurant des affaiblissements d'écho individuels correspondant aux microphones (3) respectifs sur la base d'un résultat de comparaison entre l'affaiblissement d'écho et la valeur de référence, déterminant un microphone (3) spécifié qui est une cible de mise à jour du coefficient de filtre (k) individuel parmi les microphones (3) sur la base de résultats de comparaison entre les affaiblissements d'écho individuels et les valeurs de référence individuelles, et mettant à jour le coefficient de filtre F.
